(19) Europäisches Patentamt
European Patent Office
Office européen des brevets

(11) **EP 3 462 002 B1**

(12) **EUROPEAN PATENT SPECIFICATION**

(45) Date of publication and mention
of the grant of the patent:
**14.04.2021 Bulletin 2021/15**

(51) Int Cl.:
**F01N 3/20** *(2006.01)* **F01N 5/02** *(2006.01)*

(21) Application number: **18205951.9**

(22) Date of filing: **09.09.2016**

(54) **METHOD FOR IMPROVING THE PURIFYING LIQUID EVAPORATION IN A DOSING MODULE OF AN SCR DEVICE AND DOSING MODULE ACCORDING TO THE METHOD**

VERFAHREN ZUR VERBESSERUNG DER VERDAMPFUNG EINER REINIGUNGSFLÜSSIGKEIT IN EINEM DOSIERUNGSMODUL EINER SCR-VORRICHTUNG UND EIN DEM VERFAHREN ENTSPRECHENDES DOSIERUNGSMODUL

PROCÉDÉ POUR L'AMÉLIORATION DE LA VAPORISATION D'UN LIQUIDE D'ÉPURATION DANS UN MODULE DE DOSAGE D'UN DISPOSITIF RCS ET MODULE DE DOSAGE SELON LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2015 IT UB20153515**

(43) Date of publication of application:
**03.04.2019 Bulletin 2019/14**

(62) Document number(s) of the earlier application(s) in accordance with Art. 76 EPC:
**16188151.1 / 3 141 719**

(73) Proprietor: **FPT Motorenforschung AG
9320 Arbon (CH)**

(72) Inventors:
• **FESSLER, Harald
9320 Arbon (CH)**
• **CAMPBELL, John
8580 Amsriwill (CH)**
• **SCHLEGEL, Reto
9425 Thal (CH)**

(74) Representative: **Studio Torta S.p.A.
Via Viotti, 9
10121 Torino (IT)**

(56) References cited:
**WO-A1-2012/052690    WO-A1-2012/073068
DE-A1- 19 913 462     US-A1- 2010 005 791
US-A1- 2010 077 742**

EP 3 462 002 B1

## Description

Field of the invention

The present invention relates to the field of the methods and devices for causing evaporation of purifying liquid in an exhaust gas stream produced by an internal combustion engine, before to be treated by an SCR catalyst.

Description of the prior art

After-treatment systems are, commonly, used to reduce pollutant emissions. The NOx reduction is mainly realized by a selective catalytic reduction (SCR) system. The required Ammonia (NH3) for the reduction of the NOx is usual sprayed as a liquid with dissolved UREA, commonly AdBlue or DEF (water with 32.5% UREA).

The evaporation of the liquid (water) and the decomposition (thermolysis and hydrolysis) of the UREA requires some energy. This energy is usually delivered by the exchange with hot exhaust gas. However, at lower exhaust gas temperature there is not only less available energy, although still sufficient, but the available temperature difference, between the exhaust gasses and the injected liquid, which enable the heat exchange is much reduced.

Another factor worsens the evaporation process, namely the fact that the heat transfer is less efficient at low mean gas velocities.

The overall result is a reduction of evaporation with the consequent risk of solid deposits.

Several dosing system have been developed and experimented, attempting to increase the exhaust turbulence in order to improve the urea based liquid evaporation, however, this leads to back pressure increase, thus pumping losses reflects on the overall engine efficiency.

WO2012/052690A1 discloses a device for introducing a liquid additive into a combustion engine exhaust line. A receiver element, of tubular shape, is positioned inside the exhaust line, and coaxial therewith, to receive the droplets of the liquid additive. This tubular element is provided with helical ribs so as to be used to rotate the mixture of the exhaust gases.

DE19913462A discloses a solution in which the tubular element is provided, on its peripheral surface, with heating fins, by means of which heat is transferred from the exhaust gas to the tubular element. According to the cross section in figure 3 of DE19913462A, the outer edge of some fins is coupled to the inner surface of the exhaust line.

US2010/0005791A1 corresponds to the preamble of claim 1 and discloses a solution including one or more flow modifiers, located on an interior portion or an exterior portion of the annular element, to achieve further control of mixing of the flow paths of the exhaust gas. According to an embodiment, such flow modifiers are defined by fins, that are located along a frustoconical portion of the annular element.

Summary of the invention

Therefore, it is the main object of the present invention to improve the urea-based purifying liquid evaporation limiting the backpressure increasing.

The main principle of the present invention is based on two stages. During a first stage, the exhaust gas flow is split into two gas portions, physically separated: the first one is intended to be directly mixed with the urea-based liquid and the second one is exploited to transfer heat to at least one wall(s) contacted by the urea-based liquid droplets. During a second following stage, the two gas portions are rejoined between each other before crossing the SCR.

According to the invention, a septum splits the two flows, the septum being shaped to convey heat from the second gas stream to at least one wall bounding the first gas stream. Such a septum comprises fins, in thermal contact with the septum itself, in order to capture the heat of the second gas stream. Preferably, the dosing module has a longitudinal development and the fins extend straight longitudinally with respect to the dosing development.

It should be clear that the two gas streams belong to the same volume of gas, produced by one or more subsequent cycles of the combustion engine, and not to gas volumes produced at different, spaced apart, cycles.

The urea based liquid agent is sprayed in order to collide with the septum. Therefore, the septum has a first face, intended to be impinged by the urea agent droplets, smooth enough in order to contrast or avoid any liquid urea accumulation that could lead to crystal deposits, and a second face, opposite to the first face, capable do drain heat from the second gas stream.

In order to avoid any liquid accumulation the first path, where the first gas stream circulates, is unobstructed, in the sense that there are no further elements, walls or folds that could lead to liquid accumulation and heat subtraction to the septum itself.

Obviously, a cylindrical septum is made by a folded foil to form a cylinder, however there are not concentrated folds, namely sharp bends, that could lead to liquid accumulations. The skilled person understands what is meant with "without folds".

Preferably, the fins are suitable to increase the surface of the second face of the septum of at least a factor 4.

Preferably, the septum longitudinal length is sufficient to prevent the second gas stream from being directly contacted by the urea-based liquid droplets sprayed by the dosing means.

The septum can have, according to a cross section, an open shape or a closed shape. In the latter case the septum is tubular shaped. In this case, preferably, but not mandatorily, the two gas streams are coaxial and the second gas stream is external with respect to the first one, by surrounding it annularly. Therefore, two coaxial paths are physically separate between each other through a tubular septum whose fins protrude radially within the second path.

Preferably, several spray cones are implemented to inject the urea based liquid within the dosing module, each of such cones has one own symmetry axis inclined with respect to the development axis of the dosing module. Preferably, such inclination is so that none of the spray cones has a component parallel with the development axis of the dosing module.

Preferably, the dosing module of the present invention is completely axial symmetric and in particular has a cylindrical symmetry.

Advantageously, the septum face impinged by the urea agent droplets vaporizes said droplets with a strong reduction of crystal deposits.

Preferably, the inner gas stream is swirled in order to improve the mixing effect so as two combined effects are developed to avoids urea deposits near the injection point of the urea agent spray.

The attached claims describe preferred embodiment of the invention, by forming integral part of the present description.

Brief description of the drawings

The invention will become fully clear from the following detailed description, given by way of a mere exemplifying and non limiting example, to be read with reference to the attached drawing figures, wherein:

Figure 1 shows a first embodiment of the invention,
Figures 1a and 1b show a perspective view of two versions of the first embodiment of figure 1,
Figures 1aa and 1bb show cross section views of respectively the two versions of figures 1a and 1b;
Figures 2 shows a second embodiment of the invention,
Figures 3 and 5 show preferred implementation of the embodiment according to figure 2,
Figure 4 shows a perspective view with hidden portions that could embody both the embodiment according to figures 2 and 3/5,

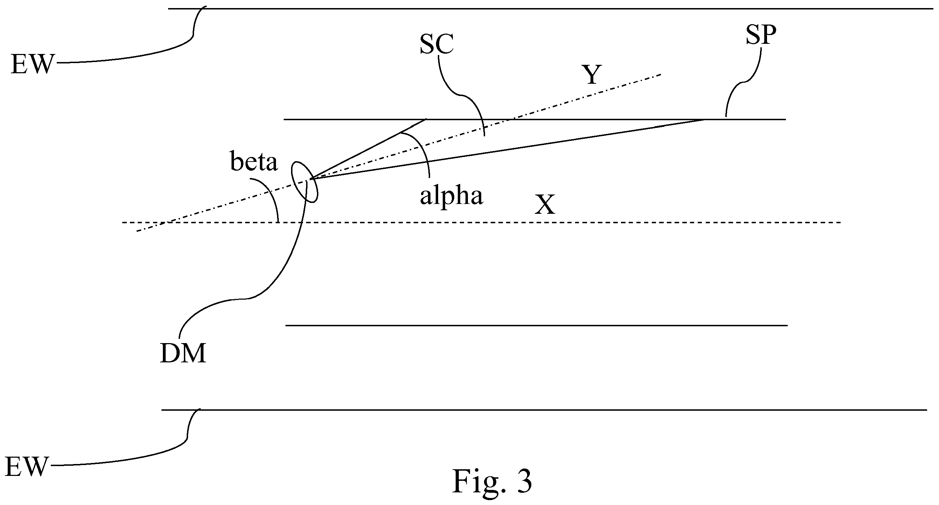

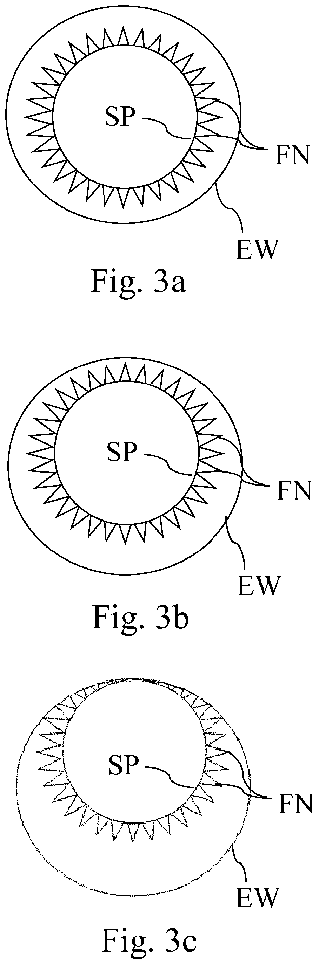

Figures 3a, 3b and 3c shows cross-section of versions based on the embodiment of figure 3.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

Detailed description of the preferred embodiments

The present invention refers to a dosing module DMD comprising an external tubular wall EW conveying exhaust gas F intended to be mixed with an urea-base liquid in the form of one or more spray cones SC.

The gas flow F comprises preferably, the entire exhaust gas flow produced by an internal combustion engine, to which the present dosing module is intended to be applied. Within the external tubular wall EW is arranged a septum SP capable to split the gas flow F into two streams F1 and F2, thus F1 + F2 = F, by defining a first path 1P and a second path 2P. Hence the two paths are arranged in parallel, so that the names 'first' and 'second' must not be interpreted as describing the paths to be sequential, rather the flow is split and the paths arranged side-by-side due to the septum separation.

The first gas stream, F1, is intended to be directly mixed with said urea-based liquid, while the second one, F2, is exploited to yield heat to the septum SP in order to avoid urea deposits. The septum SP comprises extended surfaces referred as fins FN, in one piece with the septum, protruding substantially perpendicularly from the septum surface in the second path 2P, tangent and longitudinal with the dosing development and with the second path flow 2P. The fins and the septum should be of a thermal conductive material, for example steel or the like and in thermal contact between each other.

The fins FN, in order to be in one piece, with the septum could be forged with the septum, or welded or connected by means of screws, etc.., and preferably by brazing the fins on the septum.

Alternatively, an undulated/corrugated foil, according to its cross-section, is wrapped on the face of the septum defining the second path 2P as disclosed in the figure 3a, 3b and 3c. Therefore, the term fin has a wide meaning, including also external corrugations.

The fins are designed to extract heat from the second gas stream F2 by virtue of their additional surface area and thermal conduction but while introducing minimal additional pressure loss, therefore without introducing back-pressure for the combustion engine. To achieve this pressure efficient enhancement of heat transfer, the finned surface construction of the channel 2P utilises wall friction (viscous) enhancement effect rather than create large scale changes in flow direction and associated flow separation behaviour which bring the penalty of Inertial(form) pressure losses. Inertial pressure losses are avoided because they increase non-linearly(typically quadratic) with increase in the mean gas velocity, whereas viscous losses remain linear with the gas velocity and are more pressure efficient in returning heat transfer for a given pressure drop. Analogously, the septum is longitudinally parallel with the development of the dosing module in order to avoid large scale, namely separation and local reverse of the first gas stream F1. Furthermore, the first path 1P has constant cross-section, therefore, no speed variation is introduced into the first gas stream. In other words, the septum does not work as a nozzle.

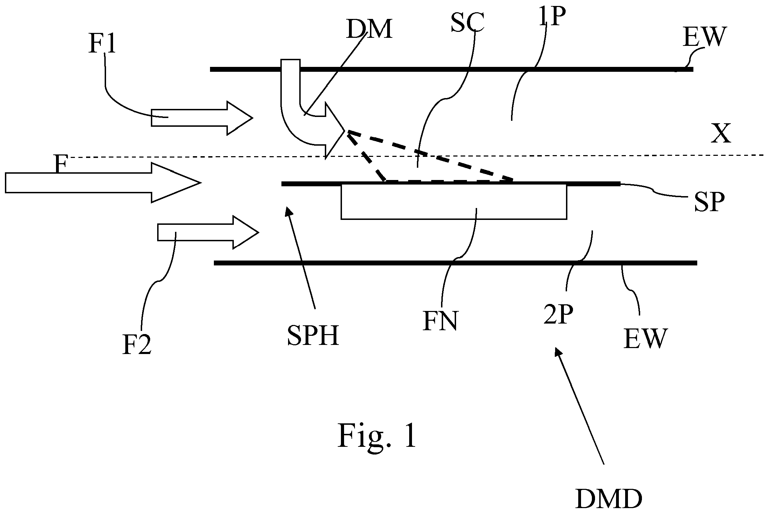

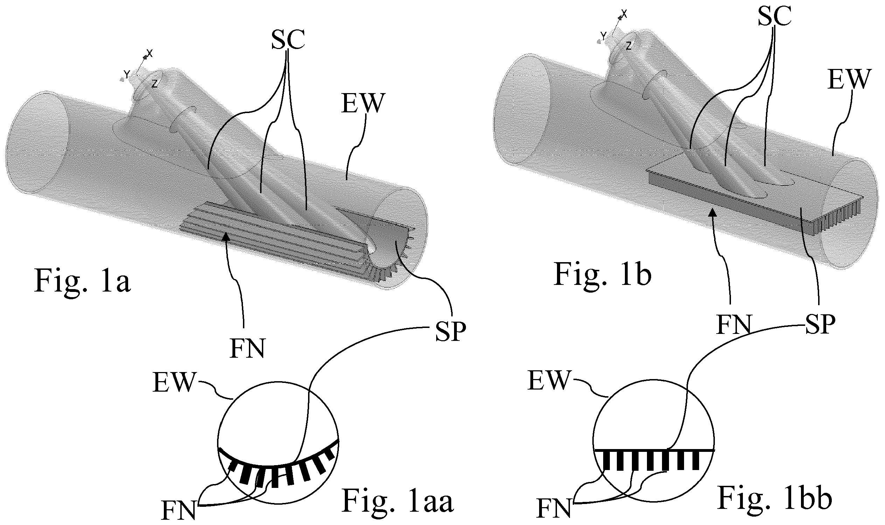

Preferably, the fins FN are spaced apart from the external tubular wall EW. Indeed in figure 1, the fins have a protruding length less than the second path 2P cross section, however the fins could have also the same length of the second path 2P cross-section, however the fins are not in thermal contact with the external tubular wall EW. In addition, the cross sections of the first path 1P and of the second path 2P could be equal or different between each other according to the splitting percentage of the two streams.

With the expression "cross section" or "transversal section" a section perpendicular to the development axis X of the dosing module DMD is meant.

The dosing module DMD, in addition, comprises at least one nozzle DM capable to spray a urea-based agent only in the first path 1P. This means that the at least one nozzle can be arranged upstream with respect the head SPH of the septum SP and oriented in order to completely direct the urea-based liquid towards the first path 1P or the at least one nozzle can be arranged directly into the second path 2P, namely downstream of the head SPH of the septum SP. Therefore, it is clear that only the first gas stream F1 is directly mixed with the urea-agent liquid, because the urea-agent is sprayed only into it, while the second gas stream F2 is mixed with the urea agent indirectly, namely when the two gas streams are rejoined downstream, namely at the end - according to an axial direction of the streams - of the septum.

The attributes "upstream" and "downstream" refer to the exhaust gas flow direction, from the left to the right in the drawings.

Also the concept of "head of the septum" or the "end of the septum" should be understood in connection with the exhaust gas flow direction, indeed the head (end) of the septum is the first (last) edge that the exhaust gas flow meets along its circulation through the dosing module.

From the above description, it is clear that the second gas stream is a "donor" stream, because, at least in a first stage of the urea-based liquid mixing it is involved only into a heat yielding without contacting the urea-based liquid droplets. While, only in a second stage, the two gas streams are rejoined and mixed together before crossing an SCR device (not shown) arranged downstream of the dosing module DMD.

According to the embodiment of figure 1, the donor gas stream is arranged under the first gas stream, according to a vertical direction following an operative arrangement of the dosing module DMD, so as the droplets colliding with the septum, are immediately evaporated by the septum heat itself. The septum can have, according to a cross section, an open shape or a closed shape. The open shape is obtained by a cross section of the examples of figures 1, 1a, 1aa, 1b, 1bb.

In addition, the septum could be complete or partial, in the sense that its longitudinal edges could be spaced apart from the external tubular wall EW.

Anyway, in case of open cross-section septum, it is preferable that said longitudinal edges are smoothly adjoined, even without contacting, with the external wall EW in order to avoid liquid depositions.

For what it will be discussed in the following, even if the septum is not complete, the spray cone(s) is (are) oriented and have a suitable opening angle so that the cone is completely incident on the septum, so in any case, the purifying liquid (urea based) is mixed only with the first gas stream F1 and not also with the second one F2.

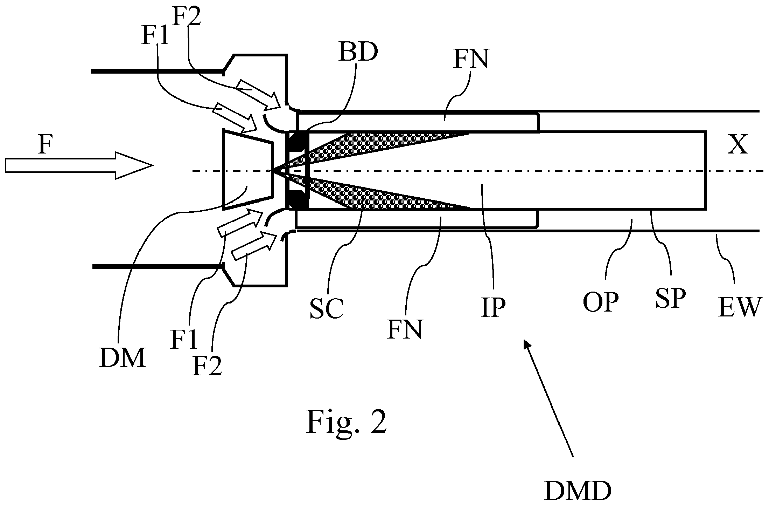

Figure 2 discloses another preferred embodiment of the invention.

As for the first embodiment, this embodiment comprises an external tubular wall EW conveying exhaust gas F intended to be mixed with an urea-base liquid in the form of one or more spray cones SC.

Within such external tubular wall EW is inserted an inner pipe defining the tubular septum SP. According to a cross-section - perpendicular with respect to the development of the dosing module - the septum appears closed, namely circular. The external tubular wall EW has a developing axis parallel with a developing axis of the tubular septum SP.

Therefore the first gas stream F1 is conveyed by the inner pipe SP defining a first path 1P, while the second gas stream F2 is conveyed through second path 2P, bounded externally by said external tubular wall EW and internally by said tubular septum SP.

Independently from the kind of septum implemented, it should be understood that the first path 1P is completely unobstructed, namely there are no further elements that could lead to liquid accumulations. In addition, the septum and eventually the inner face of the external wall defining the first path 1P are smooth, namely without grooves, folds or further walls that could lead to liquid accumulations. Obviously, the septum is arranged downstream with respect to the nozzle according to the exhaust gas circulation. Therefore, the absence of grooves, folds or further walls is relevant downstream of the nozzle, namely where the urea is sprayed.

For this reason, any groove or sharp folding leads to liquid accumulation both for coalescent effect of the liquid itself and for a high liquid concentration (height liquid load) that would refresh locally the septum by refraining the liquid from evaporation.

According to another reason, the first path 1P must be completely free of further elements in contact with the septum, because such elements would subtract heat to the septum. Furthermore, in order to stimulate the liquid evaporation, the pressure should be maintained as low as possible and obviously both the two paths contribute to determine the dosing module pressure loss. Thus, any further element in both the paths, beyond the fins or equivalent elements, would increase the pressure loss over the dosing module.

Preferably, as in figure 2, the external tubular wall and the tubular septum are coaxial and the X axis represents also an axis of axial symmetry. Preferably, the pipes EW and SP are cylindrical so that any cross section shows two concentric circles as disclosed in figure 3a.

According to other two embodiments that are intermediate embodiments between the embodiment of figure 1, 1a, 1b, and the embodiment of figures 2, 3, 5, the tubular septum is shifted in a higher position, according to a vertical direction in the sheet, but also in figure 3c the septum is spaced apart from the external tubular wall EW. Also in this case, the lower portion of the septum is lapped by the second flow F2, giving some advantages in accounting the Gravity Force effects on the liquid agent spray.

The septum SP has fins projecting radially from the septum external face into the second path 2P and the fins development is straight and longitudinal with the dosing module development and tangent with the second gas stream F2.

The gas streams F1 and F2 are preferably introduced in the dosing module in an annularly symmetrically fashion, and so maintained by the axially symmetric dosing module DMD of figures 2, 2, 3a, 5.

According to a preferred embodiment of the invention, applying to all the above embodiments, the first gas stream F1 flow is about 50% - 80% of the overall exhaust gas F, while the remaining exhaust gas flow (50% - 20%) defines the second gas stream F2 flow.

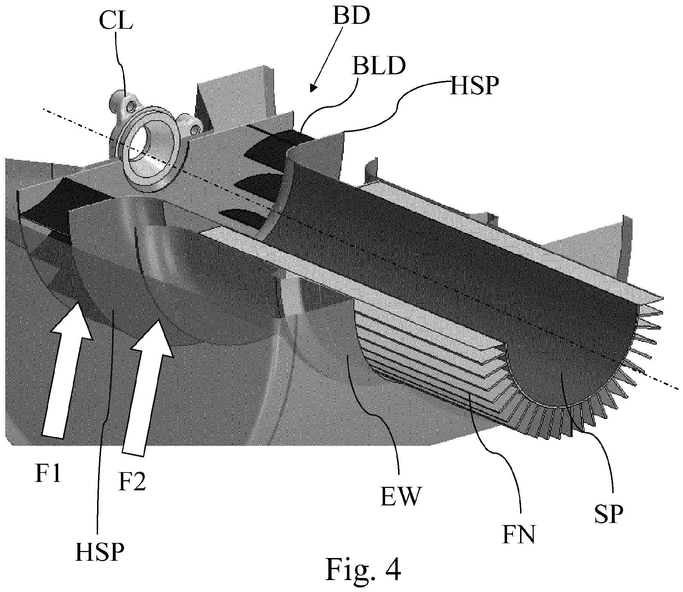

A preferred subdivision of the gas streams is (F1/F2) (60%/40%, with Fig 4 design).

This second stream F2 laps the fins to heat the septum SP to improve the heat flux and deliver sufficient energy to the septum to vaporize the spray droplets colliding therewith.

The local surface region of the septum where the spray is incident is indicated as 'is' and have an area 'Ais'. The size of this impinged area should be maximised to reduce the concentration of cooling heat flux [W/m^2]. The addition of a swirl to the 2P gas flow can effect increased area of "is" by deflecting the spray in the transverse(normal to longitudinal) direction.

Therefore, the aim of the swirl is not to improve the evaporation for convection but to spread the droplets on a wider hot surface of the septum. Thus, any element inside the inner path would contrast such interaction between gas swirl and droplets.

The fins increase the external surface of the septum of at least a factor 3 and, preferably, less than 8. This factor is required to provide a sufficient margin on to account for the required localized cooling effect of the spray concentrate on area (Ais) at "is". Heat flux to the spray area is increased by fins on the opposite surface of the septum. The minimum factor x3 corresponds to a typical fin height equal to one lateral pitch, means an area increase (factor > 3) in reference to the base area of septum without fins.

```
Thus "factor" = total convective Area(Aconv) / Area septum

without FN (ASP);
```

where Aconv = total convective area including fins exposed to the hot gas to capture heat.

Obviously, a thermal conduction path is needed between Aconv and the cooling location concentrated at Ais. Hence a maximal distribution of spray area at IS (Ais) provides the best basis for thermal communication of the convection area provided by fins. The capacity of the design to achieve a sufficient conduction is decided by the thermal resistance between Aconv and Ais and this is dependent on thermal conductivity of the material in combination with specific geometry of the fins and of the septum wall thickness.

The upper limit 8 is found by considering that even if the thermal resistance of the septum is low, an increase in Aconv does not produce any improvement in the amount of available heat at Ais. Thus, even implementing a higher factor than 8, the improvements in terms of urea agent evaporation are largely counteracted by the increase in terms of backpressure.

The opposite face of the septum, in direct contact with the urea spray is smooth in order to avoid crystal depositions (accumulation of liquid and finally solid deposits).

Preferably, if the dosing module is perfectly axially symmetric, the nozzle(s) DM is/are placed on the symmetry axis X.

Anyway, when, more than one nozzle are implemented, they are arranged angularly spaced/shifted along a circumference that is coaxial with the axis X.

In view of the function developed by the septum heated by the second gas stream F2, two or more spray cones, preferably 3 or 6, are angularly equally shifted between each other. Each cone has an aperture angle alpha between 15° and 35° (optimum 25°)and a respective symmetry axis Y incident with the symmetry axis X of the dosing module DMD, so that an incidence angle beta is between 12.5° and 27.5° with an optimum of ≈17.5°. In order to better understand this concept please see figure 3.

According to a preferred embodiment of the cone spray(s) implemented in any of the previous embodiments, such a cone spray(s) is hollow. This means that, it draws an annulus on a surface perpendicular to the rotation axis of the cone itself. Preferably, the opening angle of the hollow portion of the cone is between 7 - 13°, with a preferred value of 10°deg. Therefore, the wall of the cone spray(s) has an opening between 2° and 28°. The opening, alpha, of the spray cones and the incidence angle, beta, of each spray cone symmetry axis Y with the development or axially symmetry axis X of the entire dosing module DMD is so that, none of the spray cones has a component coaxial with the said axis X of the dosing module.

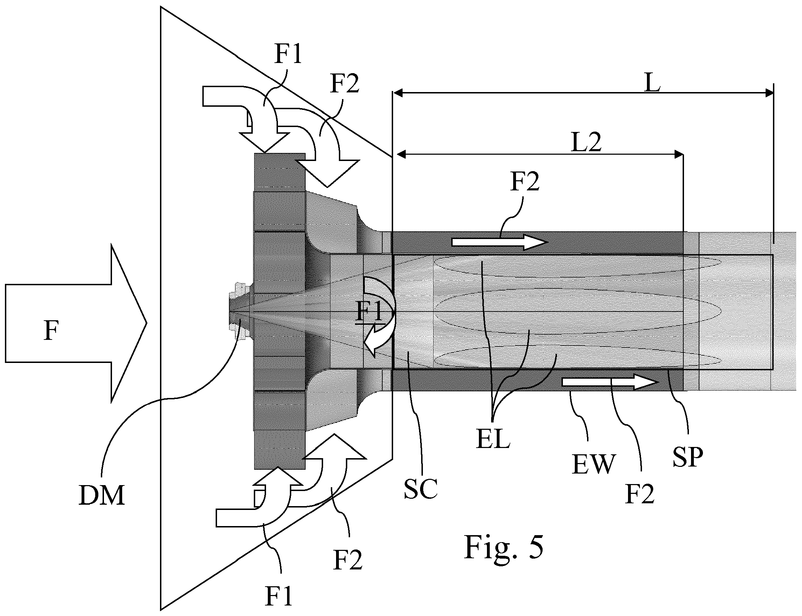

In other words, the spray cones are completely incident with the septum SP defining a stretched ellipsoid shape EL disclosed on figure 5, where the septum and the external wall are shown in transparency.

According to another preferred embodiment of the invention that could be combined with any of the above embodiments, the first gas stream F1 is swirl, before knocking the spray cones, by means of an annular device BD comprising relative blades. Thus, such annular device BD is preferably arranged along the module upstream the injection means (nozzle) till the injection means, but not downstream them.

Figure 4 shows a portion of the dosing module according to the present embodiment. It is sectioned according to a horizontal plane in order to easily recognize the septum SP provided with external radial fins FN. The cylindrical external wall EW is partially cut in order to discover the fins.

Also in this case, the blades BD do not narrow the overall section of the first path 1P, because the idea is to improve the mixing between vaporized urea liquid and first stream without increasing pressure loss. In this context the absence of any further element along the first path, downstream of the nozzle, highly desirable.

The swirl can be applied even when the septum is not coaxial with the external tubular wall and even when the septum is open as in figures 1, 1a, 1b.

The streams F1 and F2 are annularly introduced within the dosing module DMD, preferably in an axially symmetric fashion. Several blades BLD are annularly distributed in order to swirl the first gas stream F1, while, the second gas stream F2 is annularly introduced, preferably, without any swirl, by considering that the fins FN are straight shaped and arranged according to the dosing module development, as in figure 4.

Figure 4 can be read in two different ways: indeed if the septum is considered as complete and only the external wall is considered as cut, figure 4 is coherent with the example of figure 1a and 1bb, while if also the septum is considered as cut as the external wall, then figure 4 is coherent with the embodiment of figure 2.

According to the embodiments of figures 2 - 3 and 4, the septum SP and the annular device BD at contiguous and preferably in one piece. Therefore, the head SPH of the septum SP is radially oriented, assuming quite a frusto-conical shape even if the overall cross section remains constant along both the entire paths 1P and 2P.

In particular, both the stream F1 and F2 are split and introduced into the dosing module annularly, one coaxial with the other according to frusto-conical coaxial introducing paths. Then, the first stream is swirl and mixed with the urea based liquid sprayed in the cylindrical portion of the dosing module while the second laps the longitudinally straight fins for heating the septum.

Preferably, the septum SP has a Diameter D and a longitudinal development L, where L is at least 5 - 6 times D.

According to a preferred embodiment of the invention, the fins cover the longitudinally septum for a length L2 that is at least 3 times D.

Preferably, not the entire longitudinal development L of the septum is finned, but only a portion covering the corresponding area of the first face of the septum where the urea is sprayed on.

Preferably, at the end of the septum, the two streams F1 and F2 are rejoined without any deflecting wall. Alternatively, the end of septum is provided with a blinding wall and annular through holes, just upstream of the blinding wall, suitable to direct the first stream radially to mix with the second one. Then, a stream straightening can be preferably implemented as that disclosed in EP1712756 upstream of the SCR.

Independently from the shape of the paths 1P or 2P, they preferably present the same pressure drop at the head SPH of the septum. In addition, the second gas stream F2 could be slowed down in order to improve the thermal exchange with the fins. As disclosed in the figures, with the exception of the eventual swirl introduced in the first stream F1, the dosing module does not show sharp bends, therefore, the pressure drop introduced is really low, thus the backpressure is really not relevant in spite of the good mixing performance obtained.

A collar CL is disclosed in figure 4 adapted to support a single bore nozzle or a nozzle with several bores suitable to produce the spray cones depicted above and in figures 2, 3 and 6.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of protection as defined in the appended claims are deemed to be covered by this invention.

Further implementation details will not be described, as the man skilled in the art is able to carry out the invention starting from the teaching of the above description.

**Claims**

1. Method for improving the purifying liquid evaporation in a dosing module of an SCR catalyst, the dosing module (DMD) comprising an external tubular wall (EW) conveying exhaust gas and means for spraying (DM) an urea-based liquid (SC) into an exhaust gas stream (F) to purify the exhaust gas stream (F), the method comprising

   - splitting of the exhaust gas flow (F) into a first and a second gas streams (F1, F2) physically separated between each other by means of one septum (SP) and
   - providing said one septum (SP) with fins (FN) in thermal contact with a second face of the septum (SP) and arranged in order to be lapped by the second gas stream (F2),
   - spraying said purifying liquid directly onto a first face of said septum, opposite to said second face, and lapped by the first gas stream (F1);
   said first face being smooth, namely without corrugations or folds in order to avoid any purifying liquid accumulations;
   said fins (FN) being not in thermal contact with said external tubular wall (EW);
   **characterized in that** said fins increase the area of the second face of the septum of at least a factor three, so as to capture the heat content of the second gas stream (F2); the method further comprising: transferring said captured heat to said septum (SP) in order to vaporize droplets of said purifying liquid colliding with said first face of the septum (SP).

2. Method according to claim 1, further comprising a second stage wherein the first gas stream (F1) is rejoined with said second gas stream (F2) before crossing the SCR catalyst.

3. Method according to any one of previous claims, wherein said dosing module defines a longitudinal development and wherein said septum (SP) is open according to a cross-section of the dosing module and is arranged at least in a lower position with respect to said purifying liquid spray in order to exploit the Gravity Force.

4. Method according to claim 3, wherein said septum (SP) is flat or slightly curved or a half-cylinder according to its cross-section.

5. Method according to any one of previous claims 1 - 3, wherein said septum (SP) is closed according to a cross-section, namely tubular shaped, and said second gas stream (F2) flows annularly with respect to said first gas stream (F1) .

6. Method according to any one of the previous claims, wherein the dosing module defines a longitudinal development and said fins (FN) in thermal contact with the septum (SP) extend straight longitudinally with respect to the dosing development.

7. Method according to any one of previous claims, wherein said dosing module defines a longitudinal development and the longitudinal length of the septum is sufficient to prevent the second gas stream from being directly contacted by the urea-based liquid droplets sprayed by the dosing means.

8. Method according to any one of previous claims, wherein said purifying liquid is sprayed by defining one or more spray cones, each of such cones having one own symmetry axis (Y) inclined with respect to the development axis (X) of the dosing module and such inclination is so that none of the spray cones has a component parallel with the development axis (X) of the dosing module.

9.  Method according to claim 1, wherein said fins (FN) are spaced apart from said external tubular wall (EW).

10. Dosing module (DMD) of an SCR catalyst comprising

- a tubular pipe (EW) for conveying an exhaust gas flow (F)
- one septum (SP) for splitting said exhaust gas flow (F) into a first gas stream (F1) and a second gas stream (F2) physically separated from said first gas stream (F1) by means of the septum (SP),
- means for spraying (DM) a purifying liquid (SC), arranged so that said purifying liquid is sprayed only into said first gas stream (F1),
- fins (FN) in thermal contact with a second face of said septum (SP) arranged in order to be lapped by said second gas stream (F2)
a first face of said septum, opposite to said second face, being smooth, namely without corrugations or folds in order to avoid any purifying liquid accumulations;
said fins (FN) being not in thermal contact with said tubular pipe (EW);
**characterized in that** said fins increase the area of the second face of the septum of at least a factor three, so as to capture and transfer the heat content of the second gas stream (F2) to said septum (SP) while said purifying liquid is sprayed onto said first face in order to vaporize droplets of said purifying liquid colliding with said first face of the septum (SP).

11. Device according to claim 10, wherein said tubular pipe (EW) and said septum (SP) are configured to rejoin said first gas stream (F1) with said second gas stream (F2) before crossing the SCR, namely downstream of said purifying liquid spray (SC).

12. Device according to any one of claim 10 or 11, wherein said dosing module defines a longitudinal development and wherein said septum (SP) is open according to a cross-section and is arranged at least in a lower position with respect to said purifying liquid spray in order to easily collect purifying liquid droplets subjected to the Gravity force.

13. Device according to any one of previous claims 10 - 12, wherein said septum (SP) is flat or slightly curved according to its cross-section or a half-cylinder.

14. Device according to any one of previous claims 10 - 12, wherein said septum (SP) is closed according to a cross-section, namely tubular shaped, and said second gas stream (F2) flows annularly with respect to said first gas stream (F1) .

15. Device according to any one of the previous claims 10 - 14, wherein the dosing module defines a longitudinal development and said fins (FN) in thermal contact with the septum (SP) extend straight longitudinally with respect to the dosing development.

16. Device according to any one of previous claims 10 - 15, wherein said the dosing module defines a longitudinal development and the longitudinal length of the septum is sufficient to prevent the second gas stream from being directly contacted by the urea-based liquid droplets sprayed by the dosing means.

17. Device according to any one of previous claims 11 - 16, wherein said purifying liquid is sprayed by defining one or more spray cones, each of such cones has one own symmetry axis (Y) inclined with respect to the development axis (X) of the dosing module and preferably such inclination is so that none of the spray cones has a component parallel with the development axis of the dosing module.

18. Device according to claim 10, wherein said fins (FN) are spaced apart from said tubular pipe (EW).

19. Device according to any one of the previous claims 10 - 18, wherein said first gas stream (F1) is about 50% - 80% of the an overall exhaust gas (F), while the remaining exhaust gas flow (50% - 20%) defines said second gas stream (F2) flow.

20. Device according to any one of the previous claims 10 - 14, wherein said spraying means (DM) are suitable to produce two or more spray cones, angularly equally shifted between each other with respect to a nozzle head, each spray cone (SC) having an aperture angle (alpha) and a respective symmetry axis (Y) incident with said septum (SP), so that none of the spray cones has a component coaxial with a development axis (X) of the dosing module.

21. Device according to claim 20, where said aperture angle (alpha) is in between 15° and 35° and/or said incidence angle (beta) is in between 12.5° and 27.5° with an optimum of ≈17.5°.

22. Aftertreatment device comprising a dosing module (DMD) according to any one of the previous claims 10 - 21 and an SCR catalyst arranged downstream of said dosing module (DMD).

23. Vehicle comprising an aftertreatment device according to claim 22.

**Patentansprüche**

1. Verfahren zum Verbessern der Verdampfung einer Reinigungsflüssigkeit in einem Dosiermodul eines SCR-Katalysators, wobei das Dosiermodul (DMD) eine rohrförmige Außenwand (EW), die Abgas transportiert, und Mittel zum Sprühen (DM) einer harnstoffbasierten Flüssigkeit (SC) in eine Abgasströmung (F) zum Reinigen der Abgasströmung (F) aufweist, wobei das Verfahren die folgenden Schritte umfasst:

   - Teilen der Abgasströmung (F) in eine erste und eine zweite Gasströmung (F1, F2), die mittels einer Trennwand (SP) physisch voneinander getrennt sind, und
   - Versehen der Trennwand (SP) mit Rippen (FN) in thermischem Kontakt mit einer zweiten Seite der Trennwand (SP), die so angeordnet ist, dass sie durch die zweite Gasströmung (F2) überstrichen wird,
   - Sprühen der Reinigungsflüssigkeit direkt auf eine erste Seite der Trennwand gegenüber der zweiten Seite, die von der ersten Gasströmung (F1) überstrichen wird;
   wobei die erste Seite glatt ist, und zwar ohne Furchen oder Falten, um Ansammlungen der Reinigungsflüssigkeit zu vermeiden;
   wobei die Rippen (FN) mit der rohrförmigen Außenwand (EW) nicht in thermischem Kontakt sind;
   **dadurch gekennzeichnet, dass** die Rippen die Fläche der zweiten Seite der Trennwand wenigstens um einen Faktor drei erhöhen, um die Wärmemenge der zweiten Gasströmung (F2) aufzunehmen;
   wobei das Verfahren ferner den folgenden Schritt umfasst:
   Übertragen der aufgenommenen Wärme auf die Trennwand (SP), um Tröpfchen der Reinigungsflüssigkeit zu verdampfen, die auf der ersten Seite der Trennwand (SP) aufgeprallt sind.

2. Verfahren nach Anspruch 1, das ferner eine zweite Stufe umfasst, in der die erste Gasströmung (F1) mit der zweiten Gasströmung (F2) vereinigt wird, bevor der SCR-Katalysator durchlaufen wird.

3. Verfahren nach einem der vorhergehenden Ansprüche, wobei das Dosiermodul einen Längsverlauf definiert und wobei die Trennwand (SP) entsprechend einem Querschnitt des Dosiermoduls offen ist und wenigstens an einer tieferen Position in Bezug auf das Spray der Reinigungsflüssigkeit angeordnet ist, um die Schwerkraft auszunutzen.

4. Verfahren nach Anspruch 3, wobei der Querschnitt der Trennwand (SP) plan oder leicht gebogen oder ein Halbzylinder ist.

5. Verfahren nach einem der vorhergehenden Ansprüche 1-3, wobei die Trennwand (SP) einen geschlossenen, und zwar rohrförmigen Querschnitt aufweist und wobei die zweite Gasströmung (F2) in Bezug auf die erste Gasströmung (F1) ringförmig strömt.

6. Verfahren nach einem der vorhergehenden Ansprüche, wobei das Dosiermodul einen Längsverlauf definiert und die Rippen (FN) in thermischem Kontakt mit der Trennwand (SP) in Bezug auf den Verlauf der Dosiermittel gerade in Längsrichtung verlaufen.

7. Verfahren nach einem der vorhergehenden Ansprüche, wobei das Dosiermodul einen Längsverlauf definiert und wobei die Länge der Trennwand in Längsrichtung ausreichend ist, um zu verhindern, dass die zweite Gasströmung mit den harnstoffbasierten Flüssigkeitströpfchen, die durch die Dosiermittel gesprüht werden, direkt in Kontakt gelangt.

8. Verfahren nach einem der vorhergehenden Ansprüche, wobei die Reinigungsflüssigkeit gesprüht wird, indem ein oder mehrere Sprühkegel definiert werden, wobei jeder Sprühkegel eine eigene Symmetrieachse (Y) aufweist, die in Bezug auf die Verlaufsachse (X) des Dosiermoduls geneigt ist, wobei die Neigung so gewählt ist, dass keiner der Sprühkegel eine Komponente aufweist, die parallel zu der Verlaufsachse (X) des Dosiermoduls verläuft.

9. Verfahren nach Anspruch 1, wobei die Rippen (FN) von der rohrförmigen Außenwand (EW) beabstandet sind.

10. Dosiermodul (DMD) eines SCR-Katalysators, das Folgendes umfasst:

   - ein rohrförmiges Rohr (EW) zum Transportieren einer Abgasströmung (F);
   - eine Trennwand (SP) zum Teilen der Abgasströmung (F) in eine erste Gasströmung (F1) und eine zweite Gasströmung (F2), die von der ersten Gasströmung (F1) mittels der Trennwand (SP) physisch getrennt ist,
   - Mittel zum Sprühen (DM) einer Reinigungsflüssigkeit (SC), die so angeordnet sind, dass die Reinigungsflüssigkeit nur in die erste Gasströmung (F1) gesprüht wird,
   - Rippen (FN) in thermischem Kontakt mit einer zweiten Seite der Trennwand (SP), die so angeordnet ist, dass sie von der zweiten Gasströmung (F2) überstrichen wird,
   wobei eine erste Seite der Trennwand gegenüber der zweiten Seite glatt ist, und zwar ohne Furchen oder Falten, um Ansammlungen von Reinigungsflüssigkeit zu vermeiden;
   wobei die Rippen (FN) mit dem rohrförmigen Rohr (EW) nicht in thermischem Kontakt sind;
   **dadurch gekennzeichnet, dass** die Rippen die Fläche der zweiten Seite der Trennwand wenigstens um einen Faktor drei erhöhen, um die Wärmemenge der zweiten Gasströmung (F2) aufzunehmen und auf die Trennwand (SP) zu übertragen, während die Reinigungsflüssigkeit auf die erste Seite gesprüht wird, um Tröpfchen der Reinigungsflüssigkeit zu verdampfen, die auf der ersten Seite der Trennwand (SP) aufprallen.

11. Vorrichtung nach Anspruch 10, wobei das rohrförmige Rohr (EW) und die Trennwand (SP) so konfiguriert sind, dass sie die erste Gasströmung (F1) mit der zweiten Gasströmung (F2) vor einem Durchlaufen des SCR stromabwärts des Sprays (SC) der Reinigungsflüssigkeit vereinigen.

12. Verfahren nach einem der Ansprüche 10 oder 11, wobei das Dosiermodul einen Längsverlauf definiert und wobei die Trennwand (SP) entsprechend einem Querschnitt offen ist und wenigstens an einer tieferen Position im Vergleich zu dem Spray der Reinigungsflüssigkeit angeordnet ist, um Tröpfchen der Reinigungsflüssigkeit, die der Schwerkraft ausgesetzt sind, einfach zu sammeln.

13. Vorrichtung nach einem der vorhergehenden Ansprüche 10-12, wobei der Querschnitt der Trennwand (SP) plan oder leicht gebogen oder ein Halbzylinder ist.

14. Vorrichtung nach einem der vorhergehenden Ansprüche 10-12, wobei der Querschnitt der Trennwand (SP) rohrförmig geschlossen ist und wobei die zweite Gasströmung (F2) in Bezug auf die erste Gasströmung (F1) ringförmig strömt.

15. Vorrichtung nach einem der vorhergehenden Ansprüche 10-14, wobei das Dosiermodul einen Längsverlauf definiert und die Rippen (FN) in thermischem Kontakt mit der Trennwand (SP) in Bezug auf den Verlauf der Dosiermittel gerade in Längsrichtung verlaufen.

16. Vorrichtung nach einem der vorhergehenden Ansprüche 10-15, wobei das Dosiermodul einen Längsverlauf definiert und die Länge der Trennwand in Längsrichtung ausreichend ist, um zu verhindern, dass die zweite Gasströmung direkt mit den harnstoffbasierten Flüssigkeitströpfchen in Kontakt kommt, die durch die Dosiermittel gesprüht werden.

17. Vorrichtung nach einem der vorhergehenden Ansprüche 11-16, wobei die Reinigungsflüssigkeit gesprüht wird, indem ein oder mehrere Sprühkegel definiert werden, wobei jeder Kegel seine eigene Symmetrieachse (Y) hat, die in Bezug auf die Verlaufsachse (X) des Dosiermoduls geneigt ist, wobei die Neigung vorzugsweise so gewählt ist, dass keiner der Sprühkegel eine Komponente parallel zu der Verlaufsachse des Dosiermoduls aufweist.

18. Vorrichtung nach Anspruch 10, wobei die Rippen (FN) von dem rohrförmigen Rohr (EW) beabstandet sind.

19. Vorrichtung nach einem der vorhergehenden Ansprüche 10-18, wobei die erste Gasströmung (F1) etwa 50 % bis 80 % des Gesamtabgases (F) beträgt, wobei die verbleibende Abgasströmung (50 % bis 20 %) die zweite Gasströmung (F2) definiert.

20. Vorrichtung nach einem der vorhergehenden Ansprüche 10-14, wobei die Sprühmittel (DM) geeignet sind, zwei oder mehr Sprühkegel zu erzeugen, die beide in einem gleichen Winkel in Bezug auf einen Düsenkopf versetzt sind, wobei jeder Sprühkegel (SC) einen Öffnungswinkel (alpha) und eine entsprechende Symmetrieachse (Y), die mit der Trennwand (SP) zusammenfällt, aufweist, so dass keiner der Sprühkegel eine Komponente hat, die mit einer Verlaufsachse (X) des Dosiermoduls koaxial ist.

**21.** Vorrichtung nach Anspruch 20, wobei der Öffnungswinkel (alpha) im Bereich von 15° bis 35° liegt und/oder wobei der Einfallswinkel (beta) im Bereich von 12,5° bis 27,5° mit einem Optimum bei etwa 17,5° liegt.

**22.** Nachbehandlungsvorrichtung, die ein Dosiermodul (DMD) nach einem der vorhergehenden Ansprüche 10-21 und einen SCR-Katalysator, der stromabwärts des Dosiermoduls (DMD) angeordnet ist, umfasst.

**23.** Fahrzeug, das eine Nachbehandlungsvorrichtung nach Anspruch 22 umfasst.

**Revendications**

**1.** Procédé pour améliorer l'évaporation de liquide de purification dans un module de dosage d'un catalyseur SCR, le module de dosage (DMD) comprenant une paroi tubulaire externe (EW) convoyant un gaz d'échappement et des moyens pour pulvériser (DM) un liquide à base d'urée (SC) dans un flux de gaz d'échappement (F) pour purifier le flux de gaz d'échappement (F), le procédé comprenant

- la séparation du flux de gaz d'échappement (F) en des premier et deuxième flux de gaz (F1, F2) séparés physiquement l'un de l'autre au moyen d'un septum (SP) et
- la dotation dudit un septum (SP) d'ailettes (FN) en contact thermique avec une deuxième face du septum (SP) et agencées de manière à être nappées par le deuxième flux de gaz (F2),
- la pulvérisation dudit liquide de purification directement sur une première face dudit septum, opposée à ladite deuxième face, et nappée par le premier flux de gaz (F1);
ladite première face étant lisse, en d'autres termes sans ondulations ou plis afin que soit évitée toute accumulation de liquide de purification ;
lesdites ailettes (FN) n'étant pas en contact thermique avec ladite paroi tubulaire externe (EW) ;
**caractérisé en ce que** lesdites ailettes augmentent la surface de la deuxième face du septum au moins d'un facteur trois, de façon à capturer la teneur en chaleur du deuxième flux de gaz (F2) ;
le procédé comprenant en outre : le transfert de ladite chaleur capturée audit septum (SP) afin que soient vaporisées des gouttelettes dudit liquide de purification heurtant ladite première face du septum (SP) .

**2.** Procédé selon la revendication 1, comprenant en outre un deuxième étage dans lequel le premier flux de gaz (F1) est rejoint par ledit deuxième flux de gaz (F2) avant de croiser le catalyseur SCR.

**3.** Procédé selon l'une quelconque des revendications précédentes, dans lequel ledit module de dosage définit un développement longitudinal et dans lequel ledit septum (SP) est ouvert en conformité avec une section transversale du module de dosage et est disposé au moins dans une position plus basse que celle de ladite pulvérisation de liquide de purification afin que la force de gravité soit exploitée.

**4.** Procédé selon la revendication 3, dans lequel ledit septum (SP) est plat ou légèrement incurvé ou est un demi-cylindre en conformité avec sa section transversale.

**5.** Procédé selon l'une quelconque des revendications 1 à 3, dans lequel ledit septum (SP) est fermé en conformité avec une section transversale, à savoir de forme tubulaire, et ledit deuxième flux de gaz (F2) s'écoule annulairement par rapport audit premier flux de gaz (F1) .

**6.** Procédé selon l'une quelconque des revendications précédentes, dans lequel le module de dosage définit un développement longitudinal et lesdites ailettes (FN) en contact thermique avec le septum (SP) s'étendent tout droit longitudinalement par rapport au développement de dosage.

**7.** Procédé selon l'une quelconque des revendications précédentes, dans lequel ledit module de dosage définit un développement longitudinal et la longueur longitudinale du septum est suffisante pour empêcher les gouttelettes de liquide à base d'urée pulvérisées par les moyens de dosage de venir en contact direct avec le deuxième flux de gaz.

**8.** Procédé selon l'une quelconque des revendications précédentes, dans lequel ledit liquide de purification est pulvérisé par définition d'un ou plusieurs cônes de pulvérisation, chacun de ces cônes ayant un axe de symétrie propre (Y) incliné par rapport à l'axe de développement (X) du module de dosage, et cette inclinaison est telle qu'aucun des cônes de pulvérisation n'ait une composante parallèle à l'axe de développement (X) du module de dosage.

**9.** Procédé selon la revendication 1, dans lequel lesdites ailettes (FN) sont espacées de ladite paroi tubulaire externe (EW).

**10.** Module de dosage (DMD) d'un catalyseur SCR comprenant

- un tuyau tubulaire (EW) pour convoyer un flux de gaz d'échappement (F),
- un septum (SP) pour séparer ledit flux de gaz d'échappement (F) en un premier flux de gaz (F1) et un deuxième flux de gaz (F2) séparé physiquement dudit premier flux de gaz (F1) au moyen du septum (SP),
- des moyens pour pulvériser (DM) un liquide de purification (SC), agencés de façon que ledit liquide de purification soit pulvérisé uniquement dans ledit premier flux de gaz (F1),
- des ailettes (FN) en contact thermique avec une deuxième face dudit septum (SP), agencées afin d'être nappées par ledit deuxième flux de gaz (F2)
une première face dudit septum, opposée à ladite deuxième face, étant lisse, en d'autres termes sans ondulations ou plis afin que soit évitée toute accumulation de liquide de purification ;
lesdites ailettes (FN) n'étant pas en contact thermique avec ladite paroi tubulaire externe (EW) ;
**caractérisé en ce que** lesdites ailettes augmentent la surface de la deuxième face du septum au moins d'un facteur trois, de façon à capturer et transférer la teneur en chaleur du deuxième flux de gaz (F2) vers ledit septum (SP) tandis que ledit liquide de purification est pulvérisé sur ladite première face afin de vaporiser des gouttelettes dudit liquide de purification heurtant ladite première face du septum (SP).

**11.** Dispositif selon la revendication 10, dans lequel ledit tuyau tubulaire (EW) et ledit septum (SP) sont configurés pour faire rejoindre ledit premier flux de gaz (F1) avec ledit deuxième flux de gaz (F2) avant de croiser le SCR, en d'autres termes en aval de ladite pulvérisation de liquide de pulvérisation (SC).

**12.** Dispositif selon l'une quelconque des revendications 10 et 11, dans lequel ledit module de dosage définit un développement longitudinal et dans lequel ledit septum (SP) est ouvert en conformité avec une section transversale et est disposé au moins dans une position plus basse que celle de ladite pulvérisation de liquide de purification afin que soient aisément collectées des gouttelettes de liquide de purification soumises à la force de gravité.

**13.** Dispositif selon l'une quelconque des revendications 10 à 12, dans lequel ledit septum (SP) est plat ou légèrement incurvé en conformité avec sa section transversale ou est un demi-cylindre.

**14.** Dispositif selon l'une quelconque des revendications 10 à 12, dans lequel ledit septum (SP) est fermé en conformité avec une section transversale, à savoir de forme tubulaire, et ledit deuxième flux de gaz (F2) s'écoule annulairement par rapport audit premier flux de gaz (F1).

**15.** Dispositif selon l'une quelconque des revendications 10 à 14, dans lequel le module de dosage définit un développement longitudinal et lesdites ailettes (FN) en contact thermique avec le septum (SP) s'étendent tout droit longitudinalement par rapport au développement de dosage.

**16.** Dispositif selon l'une quelconque des revendications 10 à 15, dans lequel ledit module de dosage définit un développement longitudinal et la longueur longitudinale du septum est suffisante pour empêcher les gouttelettes de liquide à base d'urée pulvérisées par les moyens de dosage de venir en contact direct avec le deuxième flux de gaz.

**17.** Dispositif selon l'une quelconque des revendications 11 à 16, dans lequel ledit liquide de purification est pulvérisé par définition d'un ou plusieurs cônes de pulvérisation, chacun de ces cônes ayant un axe de symétrie propre (Y) incliné par rapport à l'axe de développement (X) du module de dosage, et de préférence cette inclinaison est telle qu'aucun des cônes de pulvérisation n'ait une composante parallèle à l'axe de développement du module de dosage.

**18.** Dispositif selon la revendication 10, dans lequel lesdites ailettes (FN) sont espacées dudit tuyau tubulaire (EW).

**19.** Dispositif selon l'une quelconque des revendications 10 à 18, dans lequel ledit premier flux de gaz (F1) représente environ 50 % à 80 % du gaz d'échappement global (F), cependant que l'écoulement de gaz d'échappement restant (50 % à 20 %) définit l'écoulement dudit deuxième flux de gaz (F2).

20. Dispositif selon l'une quelconque des revendications 10 à 14, dans lequel lesdits moyens de pulvérisation (DM) sont adaptés pour produire deux ou plus de deux cônes de pulvérisation, décalés angulairement les uns des autres de manière égale par rapport à une tête de buse, chaque cône de pulvérisation (SC) ayant un angle d'ouverture (alpha) et un axe de symétrie respectif (Y) incident vis-à-vis dudit septum (SP), de façon qu'aucun des cônes de pulvérisation n'ait une composante coaxiale vis-à-vis d'un axe de développement (X) du module de dosage.

21. Dispositif selon la revendication 20, dans lequel ledit angle d'ouverture (alpha) est compris entre 15° et 35° et/ou ledit angle d'incidence (bêta) est compris entre 12,5° et 27,5° avec un optimum d'environ 17,5°.

22. Dispositif de post-traitement comprenant un module de dosage (DMD) selon l'une quelconque des revendications 10 à 21 et un catalyseur SCR agencé en aval dudit module de dosage (DMD).

23. Véhicule comprenant un dispositif de post-traitement selon la revendication 22.

Fig. 1

EP 3 462 002 B1

Fig. 1a

Fig. 1aa

Fig. 1b

Fig. 1bb

EP 3 462 002 B1

Fig. 2

Fig. 3

Fig. 3a

Fig. 3b

Fig. 3c

Fig. 4

L

L2

F2

F2

SP

F2

EW

EL

F2

F1

F1

SC

F2

F1

DM

F

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012052690 A1
- DE 19913462 A
- US 20100005791 A1
- EP 1712756 A